(19) Europäisches Patentamt
European Patent Office
Office européen des brevets

(11) **EP 2 860 202 B1**

(12) **EUROPEAN PATENT SPECIFICATION**

(45) Date of publication and mention
of the grant of the patent:
**30.05.2018 Bulletin 2018/22**

(51) Int Cl.:
*C08F 2/00* *(2006.01)*          *C08L 23/06* *(2006.01)*
*F16L 9/12* *(2006.01)*          *F16L 9/127* *(2006.01)*

(21) Application number: **13004878.8**

(22) Date of filing: **10.10.2013**

(54) **High temperature resistant polyethylene and process for the production thereof**

Hochtemperaturbeständiges Polyethylen und Verfahren zu seiner Herstellung

Polyéthylène résistant aux températures élevées et son procédé de production

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**15.04.2015 Bulletin 2015/16**

(73) Proprietor: **Borealis AG**
**1220 Vienna (AT)**

(72) Inventors:
• **Buryak, Andrey**
**4021 Linz (AT)**
• **Piel, Tanja**
**4030 Linz (AT)**

(74) Representative: **Kador & Partner**
**Corneliusstraße 15**
**80469 München (DE)**

(56) References cited:
**EP-A1- 1 359 192      EP-A1- 1 460 105**
**EP-A1- 2 599 828      WO-A1-2005/005534**

**Description**

The present invention relates to polyethylene, particularly polyethylene for pipe applications. The invention further relates to a process for the production of polyethylene.

**Background of the invention**

Numerous polyethylene compositions for the production of pipes are known. Pipe materials are classified such as PE80 or PE100. The service temperature for PE100 is 20 °C. The ISO 9080 classification guarantees that a PE100 material will have a lifetime of at least 50 years at 20 °C using internal stress of 10 MPa.

EP 1 987 097 in the name of Chevron Phillips Chemical Company discloses a polyethylene suitable for pipe having a pellets' density of 947 kg/m$^3$ to 954 kg/m$^3$ and a MFR$_{21}$, (ASTM D1238, 21.6 kg load) of 1 to 30 g/10min. The exemplified resins showed weight average molecular weights of 278 to 346 kg/mol at Mw/Mn of from 30.5 to 35.1.

EP 1 781 712 in the name of UNIVATION TECH LLC [US] discloses various compositions, including but not limited to a high strength bimodal polyethylene composition having a density of 0.940 g/cc or more, the composition comprising a high molecular weight polyethylene component having a higher weight average molecular weight (HwHMW) and a low molecular weight polyethylene component having a lower weight average molecular weight (HwLMW), wherein the ratio of the higher weight average molecular weight to the lower weight average molecular weight (MwHMW:MwLMW) is 30 or more; and the composition qualifies as a PE 100 material such that in accordance with ISO 1167 a pipe formed from the composition that is subjected to internal pipe resistance has an extrapolated stress of 10 MPa or more when the internal pipe resistance curve is extrapolated to 50 or 100 years in accordance with ISO 9080:2003.

EP 1 922 342 of the Ineos group discloses compositions having a natural density of 935 up to 956 kg/m$^3$ at a melt flow rate (5 kg load) of 0.15 to 0.5 g/10min, the comonomer being 1-hexene and a dynamic viscosity at 100 rad/s, 190 °C of no more than 2500Pa·s.

EP 1 146 079 in the name of Borealis Technology Oy discloses compositions having a powder density of at least 953 kg/m$^3$ and a final density of the composition in the range of 955 to 965 kg/m$^3$, a MFR$_5$ of 0.15 to 0.40 g/10min. Pipes made from the compositions meet a design stress of at least 9.0 MPa (PE112). The compositions are composed of two components, whereby the low molecular weight component is a ethylene homopolymer having a MFR$_2$ of 350 to 1500 g/10min and is present in an amount of 42 to 55 wt.-%.

According to ISO 9080 polyethylene pipes are classified by their minimum required strength, i.e. their capability to withstand different hoop stresses during 50 years at 20 °C without fracturing. Thereby, pipes withstanding a hoop stress of 8.0 MPa (MRS$_{8.0}$) are classified as PE80 pipes, and pipes withstanding a hoop stress of 10.0 MPa (MRS$_{10.0}$) are classified as PE100 pipes. The next evolutionary step in polyethylene pipe development will be PE125 pipes withstanding a hoop stress of 12.5 MPa (MRS$_{12.5}$). To meet the PE80 requirements with multimodal resins manufactured by conventional Ziegler-Natta catalysts, the density needs to be at least 940 kg/m$^3$ and to meet PE100 requirements the density needs to be above 945 kg/m$^3$. However, the density of a polyethylene resin is directly connected with its crystallinity. The higher the crystallinity of a polyethylene resin the lower its slow crack growth resistance. In other words, all polyethylene materials for pressure resistance of a pipe suffer from the dependency of crystallinity and insofar density and the slow crack growth. When the density is increased, the resistance to slow crack growth (SCG) decreases. Further there are numerous applications which require higher pipe lifetime at increased temperature. This is particularly true for countries where the soil temperature is above 20 °C. For these countries a PE100 grade with higher service temperature is needed.

There is still a need for polyethylene compositions having a base resin with a high density for the production of pipes which show improved slow crack growth resistance.

**Summary of the invention**

The present invention is based on the surprising finding that pipes having a lifetime of more than 50 years at 20 °C and an internal stress of 10 MPa can be provided if the pipes are made from polyethylene composition comprising a base resin having a density of more than 952.0 kg/m$^3$ and equal to or less than 957.0 kg/m$^3$, determined according to IS0 1183-1:2004, and a content of units derived from 1-hexene of 0.45 to 0.95 wt.-%,
wherein the composition has a melt flow rate MFR$_5$ (190 °C, 5 kg) of 0.12 to 0.21 g/10min, determined according to IS0 1133, and
the base resin has a polydispersity index PI within the range of equal to or higher than 3.5 Pa$^{-1}$ and equal to or less than 4.9 Pa$^{-1}$.

The present invention insofar provides
a polyethylene composition comprising
a base resin having a density of more than 952.0 kg/m$^3$ and equal to or less than 957.0 kg/m$^3$, determined according

to IS0 1183-1:2004, and a content of units derived from 1-hexene of 0.45 to 0.95 wt.-%,
wherein the composition has a melt flow rate MFR$_5$ (190 °C, 5 kg) of 0.12 to 0.21 g/10min, determined according to ISO 1133, and
the base resin has a polydispersity index PI within the range of equal to or higher than 3.5 Pa$^{-1}$ and equal to or less than 4.9 Pa$^{-1}$.

The present invention further provides a polyethylene composition obtainable by a multistage process, the multistage process comprising

a) polymerizing ethylene in the presence of
a silica supported Ziegler Natta catalyst having a molar composition of the catalyst including
Al 1.30 to 1.65 mol/kg silica, preferably 1.33 to 1.63, more preferably 1.35 to 1.60,
Mg 1.25 to 1.61 mol/kg silica, preferably 1.26 to 1.60, more preferably 1.30 to 1.55,
Ti 0.70 to 0.90 mol/kg silica, preferably 0.71 to 0.88, more preferably 0.72 to 0.85,
and having a mean particle size (D50) of 7 to 15 μm, preferably of 8 to 12 μm (D50)
in a first reactor
for obtaining an intermediate material, the intermediate material having a melt flow rate MFR$_2$ (190 °C, 2.16 kg) of 380 to 600 g/10min; and

b) transferring the intermediate material to a second reactor

(i) feeding ethylene and 1-hexene to the second reactor

(ii) further polymerizing the intermediate material

to obtain a base resin having a density of more than 952.0 kg/m$^3$ and equal to or less than 957.0 kg/m$^3$, determined according to IS0 1183-1:2004, and having a content of units derived from 1-hexene of 0.45 to 0.95 wt.-%

c) extruding the base resin in the presence of stabilizers and carbon black into a polyethylene composition having a melt flow rate MFR$_5$ (190 °C, 5 kg) of 0.12 to 0.21 g/10min, determined according to IS0 1133 and a base resin having a polydispersity index PI within the range of equal to or higher than 3.5 Pa$^{-1}$ and equal to or less than 4.9 Pa$^{-1}$.

In a further aspect, the present invention provides an article, particularly a pipe, comprising the polyethylene composition according to the present invention.

In yet a further aspect, the present invention is concerned with the use of the inventive polyethylene composition for the production of an article, particularly a pipe.

The present invention surprisingly enables the provision of pipe material for the production of pipes having outstanding MRS classification at temperatures of above 20°C. Such temperatures of e.g. 25°C are commonly found in the soil of many countries worldwide for several months of the year and insofar are unavoidable.

The catalyst used in the present invention is preferably prepared by the following method:

(i) preparing a magnesium complex by reacting dialkyl magnesium compound of formula Mg(R)$_2$, where each R are the same or different alkyl groups of 1 to 10 C-atoms, preferably 2 to 10 C-atoms, most preferably butyloctyl magnesium, with an alcohol of formula R'OH, where R' is an alkyl group of 2 to 16 C-atoms, preferably 4 to 10 C-atoms, most preferably with 2-ethylhexanol in an aromatic solvent at a molar ratio of 1:1.70 to 1:1.95, preferably 1:1.75 to 1:1.90,

(ii) charging calcinated silica having a mean particle size (D50) in the range of 7 to 15 μm, preferably of 8 to 12 μm and an aliphatic hydrocarbon solvent, suitably pentane, into a catalyst preparation reactor,

(iii) adding alkyl aluminium chloride compound of formula AlR$_n$X$_{3-n}$, wherein R is a C$_1$-C$_{10}$ alkyl group, more preferably a C$_2$-C$_6$ alkyl group and most preferably a C$_2$-C$_4$ alkyl group; X is halogen, preferably chloride and n is 1 or 2, preferably 1, and mixing at a temperature of 10 to 70 °C, preferably at 20 to 60 °C, most preferably at 40 to 50°C, the aluminium compound is preferably ethylaluminium dichloride,

(iv) adding the magnesium complex prepared in step i) at 20 to 50 °C , preferably at 30 to 50 °C, most suitably at 40 to 50 °C in a ratio of 2.40 to 2.70 mol Mg/kg silica, preferably in a ratio of 2.45 to 2.65 mol Mg/kg silica,

(v) adding additional aliphatic hydrocarbon solvent, preferably pentane, into the reactor and keeping the temperature at above 40 °C,

(vi) stirring the mixture for 3 to 5 hours at a temperature of 45 to 55 °C,

(vii) adding $TiCl_4$ in an amount of 1.40 to 1.65 mol/kg silica during at least 1 hour at 45 to 55 °C to the reactor,

(viii) mixing the catalyst mixture at 50 to 60 °C for at least 5 hours, and

(ix) drying the catalyst mixture by vacuum and/or with nitrogen flow.

Additions of Al, Mg and Ti compounds are preferably done within 1 to 3 hours and further preferably after each addition step, the mixture is stirred for additional 1 to 6 hours.

### Definitions

A polyethylene composition according to the present invention denotes a polymer derived from at least 50 mol-% ethylene monomer units and additional comonomer units.

The term 'base resin' denotes the polymeric part of the composition without fillers such as carbon black. A person skilled in the art will understand that the measurements as to the base resin require the presence of stabilizers.

The 'polydispersity index' PI is a rheological measurement of the broadness of the molecular weight distribution curve.

All rheological measurements can be performed with the base resin and with the composition. As a matter of definition, all rheological properties shall preferably also apply to the composition.

The term 'catalyst system' shall denote the composition formed by the catalyst and the cocatalyst.

### General

*a. Density (base resin)*

The base resin according to the present invention has a density of more than 952.0 $kg/m^3$ and equal to or less than 957.0 $kg/m^3$, preferably of more than 952.2 $kg/m^3$ and equal to or less than 956.0 $kg/m^3$, more preferably of more than 952.5 $kg/m^3$ and equal to or less than 955.0 $kg/m^3$ and most preferably of more than 953.0 $kg/m^3$ and equal to or less than 954.0 $kg/m^3$ determined according to IS0 1183-1:2004.

*b. $MFR_5$*

The composition according to the present invention has a melt flow rate $MFR_5$ (190 °C, 5 kg) of 0.12 to 0.21 g/10min, preferably 0.13 to 0.20 g/10min, more preferably 0.14 to 0.19 g/10min and most preferably 0.15 to 0.18 g/10min determined according to IS0 1133.

The base resin is further characterized by specific rheological properties. All rheological properties as reported in the experimental part have been measured on the composition.

*c. PI*

The base resin, preferably the composition has a polydispersity index PI within the range of equal to or higher than 3.5 $Pa^{-1}$ and equal to or less than 4.9 $Pa^{-1}$, preferably within the range of equal to or higher than 3.6 $Pa^{-1}$ and equal to or less than 4.0 $Pa^{-1}$.

*d. $SHI_{2.7/210}$*

The base resin, preferably the composition, preferably has a shear thinning index $SHI_{2.7/210}$ of 85 to 200, more preferably a shear thinning index $SHI_{2.7/210}$ of 90 to 120, and most preferably a shear thinning index $SHI_{2.7/210}$ of 90 to 115. The shear thinning index $SHI_{2.7/210}$ can be modified for a given catalyst system by varying the relative amounts of low and high molecular weight material (via split of the reactors) and by varying the molecular weights of the respective low and high molecular weight materials, for example by variation of the chain transfer agent feed. Moreover, different catalyst systems result in a specific intrinsic shear thinning index.

e. $SHI_{1/100}$

The base resin, preferably the composition, has an extrapolated shear thinning index $SHI_{1/100}$ of 31 to 60, more preferably 31 to 58 and most preferably 31 to 55. The shear thinning index $SH1_{1/100}$ can be modified as explained above for the $SHI_{2.7/210}$ shear thinning index. Moreover, the shear thinning index $SH1_{1/100}$ is particularly sensitive to the molecular weight distribution provided intrinsically by a catalyst system.

f. Density (composition)

The composition according to the present invention has a density of more than 963.0 $kg/m^3$ and equal to or less than 971.0 $kg/m^3$, preferably of more than 963.1 $kg/m^3$ and equal to or less than 970.0 $kg/m^3$, more preferably of more than 963.2 $kg/m^3$ and equal to or less than 969.0 $kg/m^3$ and most preferably of more than 963.5 $kg/m^3$ and equal to or less than 968.0 kg/m3 determined according to ISO 1183-1:2004.

The density of the composition is influenced by the density of the base resin and can further be adjusted by the amount of filler, usually carbon black, in the composition.

The density of the base resin is mainly influenced by the amount and type of comonomer. In addition to that, the nature of the polymer originating mainly from the catalyst used as well as the melt flow rate play a role. In addition to that, it should be stressed that the comonomer does not need to be a single comonomer. Mixtures of comonomers are also possible.

g. $C_6$ (content)

The base resin according to the present invention preferably has a content of units derived from 1-hexene of 0.50 to 0.90 wt.-%, more preferably 0.60 to 0.88 wt.-% and even more preferably 0.70 to 0.88 wt.-%.

h. G'(5 kPa)

The base resin, preferably the composition, according to the present invention preferably has a storage modulus of G' (5 kPa) of 2750 Pa to 3300 Pa, more preferably 2800 Pa to 3250Pa, even more preferably 2850 Pa to 3200 Pa and most preferably 3000 Pa to 3150 Pa.

i. G' (2 kPa)

The base resin, preferably the composition according to the present invention preferably has a storage modulus of G' (2 kPa) of 850 Pa to 1100 Pa, more preferably 900 Pa to 1050 Pa, even more preferably 925 Pa to 1025 Pa and most preferably 950 Pa to 1000 Pa.

The storage modulus is significantly influenced by the amount of very high molecular weight material. Lower values of storage modulus of G' (2 kPa) indicate a narrow molecular weight distribution from a qualitative and general point of view.

j. $FRR_{21/5}$

The composition according to present invention preferably has a flow rate ratio $FRR_{21/5}$, being the ratio of $MFR_{21}$ to $MFR_5$ of 40.0 to 65.0, more preferably 45.0 to 60.0, even more preferably 47.0 to 57.0 and most preferably 48.0 to 56.0. These $FRR_{21/5}$ ranges preferably also apply to the base resin according to the present invention.

k. Complex viscosity $eta_{0.05\ rad/s}$

The base resin, preferably the composition according to the present invention preferably has a complex viscosity at 0.05 rad/s eta* of 220 000 Pa·s to 280 000 Pa·s, more preferably 225 000 Pa·s to 270 000 Pa·s, even more preferably 230 000 Pa·s to 260 000 Pa·s and most preferably 240 000 Pa·s to 255 000 Pa·s.

l. Complex viscosity $eta_{300\ rad/s}$

The base resin, preferably the composition, according to the present invention preferably has a complex \viscosity at 300 rad/s eta* of 1000 Pa·s to 1250 Pa·s, more preferably 1025 Pa·s to 1200 Pa·s, and most preferably 1075 Pa·s to 1175 Pa·s.

The present invention is further preferably concerned with a polyethylene composition, wherein the base resin comprises, preferably consists of, at least two ethylene homo- or copolymer fractions (A) and (B) being different in their weight average molecular weight Mw,

wherein fraction (A) is an ethylene homopolymer and fraction (B) is a copolymer of ethylene and 1-hexene, whereby fraction (A) has a melt flow rate $MFR_2$ (190 °C, 2.16 kg) of 380 to 600 g/10min, whereby fraction (A) is present in an amount of 46.0 to 54.0 wt.-%, more preferably 49.5 to 53.0 wt.-% and most preferably 50.5 to 52.5 wt.-%.

More preferably the present invention is concerned with a polyethylene composition, wherein the base resin comprises, preferably consists of, at least two ethylene homo- or copolymer fractions (A) and (B) being different in their weight average molecular weight Mw,

wherein fraction (A) is an ethylene homopolymer and fraction (B) is a copolymer of ethylene and 1-hexene, whereby fraction (A) has a melt flow rate $MFR_2$ (190 °C, 2.16 kg) of 390 to 500 g/10min, whereby fraction (A) is present in an amount of 46.0 to 54.0 wt.-%, more preferably 49.5 to 53.0 wt.-% and most preferably 50.5 to 52.5 wt.-%.

In a further aspect, the present invention is concerned with a polyethylene composition obtainable by a multistage process, the multistage process comprising

a) polymerizing ethylene in the presence of a silica supported Ziegler Natta catalyst having a molar composition of the catalyst including

Al 1.30 to 1.65 mol/kg silica, preferably 1.33 to 1.63, more preferably 1.35 to 1.60,
Mg 1.25 to 1.61 mol/kg silica, preferably 1.26 to 1.60, more preferably 1.30 to 1.55,
Ti 0.70 to 0.90 mol/kg silica, preferably 0.71 to 0.88, more preferably 0.72 to 0.85,
and having a mean particle size (D50) of 7 to 15 $\mu$m, preferably 8 to 12 $\mu$m (D50),
in a loop reactor in the presence of a chain transfer agent and an aluminium alkyl as cocatalyst
for obtaining an intermediate material, the intermediate material having a melt flow rate $MFR_2$ (190 °C, 2.16 kg) of 380 to 600 g/10min; and

b) transferring the intermediate material to a gas phase reactor

(i) feeding ethylene and 1-hexene to the gas phase reactor

(ii) further polymerizing the intermediate material

to obtain a base resin having a density of more than 952 kg/m$^3$ and equal to or less than 957 kg/m$^3$, determined according to ISO 1183-1:2004, and having a content of units derived from 1-hexene of 0.45 to 0.95 wt.-%, extruding the base resin in the presence of stabilizers and carbon black into a polyethylene composition having a melt flow rate $MFR_5$ (190 °C, 5 kg) of 0.12 to 0.21 g/10min, determined according to ISO 1133, the base resin having a polydispersity index PI within the range of equal to or higher than 3.5 Pa$^{-1}$ and equal to or less than 4.9 Pa$^{-1}$.

In yet a further aspect, the present invention is concerned with an article comprising the polyethylene composition as described above.

The article is preferably a pipe or pipe fitting. Such pipes preferably have a slow crack growth resistance in the Notched Pipe Test of at least 2300 h, more preferably at least 2500 h, even more preferably at least 3000 h and most preferably at least 3200 h, determined according to IS0 13479 at a pressure of 9.2 bar and 80 °C.

Moreover the inventive pipes preferably have a S4 temperature of lower than - 19.0 °C, more preferably a S4 temperature of lower than - 20.0 °C, even more preferably a S4 temperature of lower than - 21.0 °C and most preferably a S4 temperature of - 22.0 °C or lower. Usually the S4 temperature will not be lower than - 29.0°C.

In addition to the aspects mentioned above, the present invention is concerned with the use of the polyethylene composition according to the present invention for the production of an article, preferentially a pipe or a pipe fitting.

## Process

The inventive composition for making polyethylene pressure pipes is produced by polymerizing respectively copolymerizing ethylene in a reactor cascade formed by at least a first reactor and a second reactor, whereby preferably the first reactor is a loop reactor and further preferably, the second reactor is a gas phase reactor.

The polymerization applies a silica supported catalyst having a molar composition of the catalyst including Al: 1.30 to 1.65 mol/kg silica, Mg: 1.26 to 1.61 mol/kg silica, and Ti: 0.70 to 0.90 mol/kg silica.

The average particle size of the catalysts used in the field is typically from 10 to 100 $\mu$m. However, according to the present invention, it has turned out that special advantages can be obtained if the catalyst has a mean particle size from (D50) of 7 to 15 $\mu$m, preferably from 8 to 12 $\mu$m (D50).

The catalyst particle size is mainly influenced by the particle size of the support material, in the present case silica support material. Thus, suitable support materials for the catalyst used in the present invention are silica support materials having reasonable small particle size, i.e. silica with a mean particle size (D50) below 15 $\mu$m, preferably 7 to 15 $\mu$m (D50), like 8 to 12 $\mu$m (D50). One example of suitable silica support is, Sylopol2100, produced and marketed by Grace.

The magnesium compound is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is the most preferred alcohol.

The magnesium dialkyl may be any compound of magnesium bonding to two alkyl groups, which may be the same or different. Butyl-octyl magnesium is one example of the preferred magnesium dialkyls.

The aluminium compound is chlorine containing aluminium alkyl. Especially preferred compounds are aluminium alkyl dichlorides and aluminium alkyl sesquichlorides.

The titanium compound is a halogen containing titanium compound, preferably chlorine containing titanium compound. An especially preferred titanium compound is titanium tetrachloride.

The catalyst can be prepared by sequentially contacting the carrier with the above mentioned compounds as described in EP-A-688794. Alternatively, it can be prepared by first preparing a solution from the components and then contacting the solution with a carrier as described in WO-A-01155230. Preferably the catalyst is prepared according to the general preparation concept as disclosed in EP-A-688794 and described in detail in the present application.

The catalyst as described above is used together with a cocatalyst, also called activator. Suitable cocatalysts are metal alkyl compounds and especially aluminium alkyl compounds. These compounds include alkyl aluminium halides, such as ethylaluminium dichloride, diethylaluminium chloride, ethylaluminium sesquichloride, dimethylaluminium chloride and the like. They also include trialkylaluminium compounds, such as trimethylaluminium, triethylaluminium, tri-isobutylaluminium, trihexylaluminium and tri-n-octylaluminium. Especially preferred cocatalysts are trialkylaluminiums, of which triethylaluminium, trimethylaluminium and tri-isobutylaluminium are particularly used, most preferably triethylaluminium (TEA).

The catalyst as described above is contacted with the cocatalyst as described above. The contacting of the catalyst and the cocatalyst can either be conducted prior to introducing the catalyst into the polymerization reactor, or it can be conducted by introducing the two components separately into the polymerization reactor(s).

In the catalyst system according to the present invention, i.e. the combination of the catalyst and the cocatalyst according to the present invention, the molar ratio between the aluminium in said cocatalyst and the titanium of said catalyst is preferably 20:1 to 5:1, more preferably 15:1 to 7:1 and most preferably 12:1 to 8:1.

**Pipe production**

Polymeric pipes are generally manufactured by extrusion or, to a small extent, by injection moulding. A conventional plant for extrusion of polymer pipes comprises an extruder, a die-head, a calibrating device, a cooling equipment, a pulling device, and a device for cutting and/or for coiling up the pipe.

The manufacture of polyethylene materials for use in pressure pipes is discussed in an article by Scheirs et al (Scheirs, Böhm, Boot and Leevers: PE100 Resins for Pipe Applications, TRIP Vol. 4, No. 12 (1996) pp. 408-415). The authors discuss the production technology and properties of PE100 pipe materials. They point out the importance of proper comonomer distribution and molecular weight distribution in order to optimize slow crack growth and rapid crack propagation.

**Process details**

The temperature in the first reactor, preferably the slurry phase reactor, more preferably the loop reactor, is typically from 50 to 115 °C, preferably from 60 to 110 °C and in particular from 70 to 100 °C. The pressure is typically from 1 to 150 bar, preferably from 1 to 100 bar.

The first reactor in principle may be any reactor. Preferably, the reactor is a slurry reactor. Such reactors include a continuous stirred tank reactor and a loop reactor. It is especially preferred to conduct the polymerization in a loop reactor. In such reactors the slurry is circulated with a high velocity along a closed pipe by using a circulation pump. Loop reactors are generally known in the art and examples are given, for instance, in US-A-4,582,816, US-A-3,405,109, US-A-3,324,093, EP-A-479 186 and US-A-5,391,654.

It is sometimes advantageous to conduct the slurry phase polymerization above the critical temperature and pressure of the fluid mixture. Such operations are described in US-A-5,391,654. In such an operation, the temperature is typically at least 85 °C, preferably at least 90 °C. Furthermore the temperature is typically not higher than 110°C, preferably not higher than 105°C. The pressure under these conditions is typically at least 40 bar, preferably at least 50 bar. Furthermore, the pressure is typically not higher than 150 bar, preferably not higher than 100 bar. In a preferred embodiment, the slurry phase polymerization step, is carried out under supercritical conditions whereby the reaction temperature and reaction pressure are above equivalent critical points of the mixture formed by hydrocarbon medium, monomer, hydrogen and optional comonomer and the polymerization temperature is lower than the melting temperature of the polymer formed.

The slurry may be withdrawn from the slurry phase reactor either continuously or intermittently. A preferred way of intermittent withdrawal is the use of settling legs where the slurry is allowed to concentrate before withdrawing a batch of the concentrated slurry from the reactor. The use of settling legs is disclosed, amongst others, in US-A-3,374,211, US-A-3,242,150 and EP-A-1 310 295. Continuous withdrawal is disclosed, amongst others, in EP-A-891 990, EP-A-1 415 999, EP-A-1 591 460 and WO-A-2007/025640. The continuous withdrawal is advantageously combined with a suitable concentration method as disclosed in EP-A-1 415 999 and EP-A-1 591 460.

Settling legs are used to concentrate the slurry that is withdrawn from the reactor. The withdrawn stream thus contains more polymer per volume than the slurry within the reactor in average. This has the benefit that less liquid needs to be recycled back to the reactor and thereby the costs of the equipment are lower. In commercial scale plants, the fluid which is withdrawn with the polymer evaporates in a flash tank and from there it is compressed with a compressor and recycled into the slurry phase reactor.

However, the settling legs withdraw the polymer intermittently. This causes the pressure and also other variables in the reactor to fluctuate with the period of the withdrawal. Also the withdrawal capacity is limited and depends on the size and number of settling legs. To overcome these disadvantages, continuous withdrawal is often preferred.

The continuous withdrawal, on the other hand, has the problem that it typically withdraws the polymer in the same concentration as it is present within the reactor. To reduce the amount of hydrocarbons to be compressed, the continuous outlet is advantageously combined with a suitable concentration device, such as a hydrocyclone or sieve, as disclosed in EP-A-1 415 999 and EP-A-1 591 460. The polymer-rich stream is then directed to a flash and the polymer-lean stream is returned directly into the reactor.

For adjusting the $MFR_2$ of the polyethylene fraction polymerized in the slurry phase reactor, preferably hydrogen is introduced into the reactor. The hydrogen feed is preferably adjusted to the ethylene feed in order to fulfil a hydrogen to ethylene ratio in the slurry phase reactor of 380 to 600 mol/kmol, more preferably 400 to 550 mol/kmol, most preferably 450 to 530 mol/kmol.

The polyethylene fraction produced in the slurry phase reactor is an ethylene homopolymer fraction.

If polymerizing a copolymer, comonomers preferably are selected from the group comprising 1-butenel 1-hexenel 4-methyl-1-pentene, 1-octene or their mixtures, especially preferred is 1-hexene. In a preferred embodiment in the slurry phase reactor, an ethylene homopolymer is polymerized so that no comonomer is fed to this reaction stage.

The polymer fraction produced in the slurry phase reactor preferably is transferred to at least one gas phase reactor.

The temperature in the second reactor, preferably at least one fluidized bed gas phase reactor, is typically from 50 to 100°C, preferably from 65 to 90°C. The pressure is typically from 10 to 40 bar, preferably from 15 to 30 bar.

In a fluidized bed gas phase reactor, an olefin is polymerized in the presence of a polymerization catalyst in an upwards moving gas stream. The reactor typically contains a fluidized bed comprising the growing polymer particles containing the active catalyst located above a fluidization grid.

The polymer bed is fluidized with the help of a fluidization gas comprising the olefin monomer, eventually comonomer(s), eventually chain growth controllers or chain transfer agents, such as hydrogen, and eventually inert gas. The inert gas can thereby be the same or different as the inert gas used in the slurry phase reactor. The fluidization gas is introduced into an inlet chamber at the bottom of the reactor. To make sure that the gas flow is uniformly distributed over the cross-sectional surface area of the inlet chamber, the inlet pipe may be equipped with a flow dividing element as known in the art, e. g. US-A-4,933,149 and EP-A-684 871.

From the inlet chamber the gas flow is passed upwards through the fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO-A-2005/087261. Other types of fluidization grids are disclosed, amongst others, in US-A-4,578,879, EP 600 414 and EP-A-721 798. An overview is given in Geldart and Bayens: The Design of Distributors for Gas-fluidised Beds, Powder Technology, Vol. 42, 1985.

The fluidization gas passes through the fluidized bed. The superficial velocity of the fluidization gas must be higher than the minimum fluidization velocity of the particles contained in the fluidized bed, as otherwise no fluidization would occur. On the other hand, the velocity of the gas should be lower than the onset velocity of the pneumatic transport, as otherwise the whole bed would be entrained with the fluidization gas. The minimum fluidization velocity and the onset velocity of the pneumatic transport can be calculated when the particle characteristics are known by using common engineering practice. An overview is given, amongst others, in Geldart: Gas Fluidisation Technology, J. Wiley & Sons, 1996.

When the fluidization gas is contacted with the bed containing the active catalyst the reactive components of the gas, such as monomers and chain transfer agents, react in the presence of the catalyst to produce the polymer product. At the same time, the gas is heated by the reaction heat.

The unreacted fluidization gas is then removed from the top of the reactor, compressed and recycled into the inlet chamber of the reactor. Prior to the entry into the reactor, fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

After that, the gas is cooled in a heat exchanger to remove the reaction heat. The gas is cooled to a temperature which is lower than that of the bed to prevent the bed from being heated because of the reaction. It is possible to cool the gas to a temperature where a part of it condenses. When the liquid droplets enter the reaction zone they are vaporized. The vaporization heat then contributes to the removal of the reaction heat. This kind of operation is called condensed mode and variations of it are disclosed, amongst others, in WO-A-2007/025640, US-A-4,543,399, EP-A-699 213, and WO-A-94/25495. It is also possible to add condensing agents into the recycle gas stream, as disclosed in EP-A-696 293. The condensing agents are non-polymerizable components, such as propane, n-pentane, isopentane, n-butane or isobutane, which are at least partially condensed in the cooler.

The polymeric product may be withdrawn from the gas phase reactor either continuously or intermittently. Combinations of these methods may also be used. Continuous withdrawal is disclosed, amongst others, in WO-A-00/29452. Intermittent withdrawal is disclosed, amongst others, in US-A-4,621,952, EP-A-188 125, EP-A-250 169 and EP-A-579 426.

The top part of the at least one gas phase reactor may include a so called disengagement zone. In such a zone, the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain time-averaged bed levels.

Also antistatic agent(s) may be introduced into the at least one gas phase reactor if needed. Suitable antistatic agents and methods to use them are disclosed, amongst others, in US-A-5,026,795, US-A-4,803,251, US-A-4,532,311, US-A-4,855,370 and EP-A-560 035. They are usually polar compounds and include, amongst others, water, ketones, aldehydes and alcohols.

The reactor may include a mechanical agitator to further facilitate mixing within the fluidized bed. An example of suitable agitator design is given in EP-A-707 513.

For adjusting the melt flow rate of the polyethylene fraction polymerized in the gas phase reactor, hydrogen is introduced into the reactor. The hydrogen feed is preferably adjusted to the ethylene feed in order to fulfil a hydrogen to ethylene ratio in the gas phase reactor of 0.1 to 20 mol/kmol, more preferably of 0.5 to 10 mol/kmol, and most preferably of 1.5 to 5.5 mol/kmol.

Further, the final polyethylene base resin emerging from the gas phase reactor, preferably consisting of fractions (A) and (B), optionally together with a pre-polymer fraction, preferably has a density of more than 952 kg/m$^3$ and equal or less than 957.0 kg/m$^3$, more preferably 952.2 to 956.0 kg/m$^3$, and most preferably more than 953.0 to equal or less than 954.0 kg/m$^3$ determined according to IS0 1183-1:2004.

The catalyst system according to the present invention, i.e. the catalyst and the cocatalyst according to the present invention, is fed to the first polymerization reactor. In case a pre-polymerization step is in use, catalyst is fed to the pre-polymerization step.

Preferably a pre-polymerization step is not used.

The catalyst may be transferred into the polymerization zone by any means known in the art. It is thus possible to suspend the catalyst in a diluent and maintain it as homogeneous slurry. Especially preferred is to use oil having a viscosity from 20 to 1500 mPa·s as diluent, as disclosed in WO-A-2006/063771. It is also possible to mix the catalyst with a viscous mixture of grease and oil and feed the resultant paste into the polymerization zone. Still further, it is possible to let the catalyst settle and introduce portions of thus obtained catalyst mud into the polymerization zone in a manner as disclosed, for instance, in EP-A-428 054.

In one embodiment of the present invention, the process may further comprise a pre-polymerization step which precedes the polymerization steps. The purpose of the pre-polymerization is to polymerize a small amount of polymer onto the catalyst at a low temperature and/or a low monomer concentration. By pre-polymerization it is possible to improve the performance of the catalyst in slurry and/or modify the properties of the final polymer. The pre-polymerization step may be conducted in slurry or gas phase. Preferably, the pre-polymerization is conducted in slurry, preferentially a loop reactor. Thus, the pre-polymerization step may be conducted in a loop reactor. The pre-polymerization is then preferably conducted in an inert diluent, typically a hydrocarbon diluent such as methane, ethane, propane, n-butane, isobutene, pentanes, hexanes, heptanes, octanes etc., or their mixtures. Preferably, the diluent is a low boiling hydrocarbon having from 1 to 4 carbon atoms or a mixture of such hydrocarbons. The most preferred diluent is propane.

The temperature in the pre-polymerization step is typically from 0 °C to 90 °C, preferably from 20 °C to 80 °C, more preferably from 40 °C to 70 °C.

The pressure is not critical and is typically from 1 bar to 150 bar, preferably from 10 bar to 100 bar. The molecular weight of the pre-polymer may be controlled by hydrogen as it is known in the art. Further, antistatic additives may be used to prevent the particles from adhering to each other or the walls of the reactor, as disclosed in WO-A-96/19503 and WO-A-96/32420.

The catalyst components are preferably all introduced to the pre-polymerization step. However, where the solid catalyst component and the cocatalyst can be fed separately, it is possible that only a part of cocatalyst is introduced into the pre-polymerization stage and the remaining part into the subsequent polymerization stages. Also in such cases it is necessary to introduce as much cocatalyst into the pre-polymerization stage as necessary to obtain a sufficient polymerization reaction.

The embodiment including the pre-polymerization step is not preferred. Thus, in a preferred embodiment of the present invention, the process does not include a pre-polymerization step.

The polyethylene composition of the invention preferably is produced in a multistage process which further comprises a compounding step, wherein the base resin, which is typically obtained as a base resin powder from the reactor, is extruded in an extruder and then pelletized to polymer pellets in a manner known in the art to form the polyethylene composition of the invention.

Optionally, additives or other polymer components can be added to the base resin during the compounding step in an amount as described above.

It is preferred that the addition of further polymer components is limited to an amount of less than 3 wt.-%, preferably less than 2 wt.-% with respect to the total polyethylene composition according to the present invention.

Preferably, the base resin of the invention obtained from the reactor is compounded in the extruder together with additives in a manner known in the art.

The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In one embodiment, the extrusion step is carried out using feed rates of 100 kg/h to 500 kg/h, more preferably 150 kg/h to 300 kg/h in pilot production scale. Preferably, the throughput is typically from 10 to 50 tons/h in commercial production.

The following conditions apply to both, the pilot production scale and the commercial production. The screw speed of the extruder is preferably 250 rpm to 450 rpm, more preferably 300 rpm to 400 rpm.

Preferably, in said extrusion step, the SEI (specific energy input) of the extruder is 200 kWh/ton to 300 kWh/ton, more preferably 220 kWh/ton to 280 kWh/ton, whereby the SEI is directly calculated from the electric input of the extruder ignoring the intrinsically limited effectiveness.

The melt temperature in said extrusion step is preferably 200 °C to 300 °C, more preferably 230 °C to 270 °C.

Preferably the temperatures at the zones of an extruder having 4 zones (with zone 4 downstream zone 3, zone 3 downstream zone 2, zone 2 downstream zone 1) are set as follows. Zone 1 is preferably set to 80 to 120°C. Zone 2 is preferably set to 180 to 220°C. Zone 3 is preferably set to 230 to 270°C. Zone 4 is preferably set to 160 to 200°C. More preferably the 4 zones are set as follows:

zone 1 from 90 to 110°C; zone 2 from 190 to 210°C; zone 3 from 240 to 260°C; and zone 4 from 170 to 190°C.

Furthermore, the present invention relates to an article, preferably a pipe or pipe fitting, comprising a polyethylene composition as described above or obtainable by a process as described above, and to the use of such a polyethylene composition for the production of an article, preferably a pipe.

**Examples:**

1. Definitions

*a) Melt Flow Rate*

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_5$ of polyethylene is measured at a temperature of 190 °C and a load of 5 kg, the $MFR_2$ of polyethylene at a temperature of 190 °C and a load of 2.16 kg and the $MFR_{21}$ of polyethylene is measured at a temperature of 190 °C and a load of 21.6 kg. The quantity FRR (flow rate ratio) denotes the ratio of flow rates at different loads. Thus, $FRR_{21/5}$ denotes the value of $MFR_{21}/MFR_5$.

*b) Density*

Density of the polymer was measured according to ISO 1183-1:2004 Method A on compression moulded specimen prepared according to EN ISO 1872-2 (Feb 2007) and is given in $kg/m^3$.

*c) Comonomer content*

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$, respectively. All spectra were recorded using a $^{13}C$ optimized 7 mm magic-angle spinning (MAS) probehead at 150 °C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {[1], [2], [6]}. Standard single-pulse excitation was employed utilizing the transient NOE at short recycle delays of 3 s {[1], [3]) and the RSHEPT decoupling scheme {[4], [5]}. A total of 1024 (1k) transients were acquired per spectrum. This setup was chosen due to its high sensitivity towards low comonomer contents.

Quantitative $^{13}C\{^1H\}$ NMR spectra were processed, integrated and quantitative properties determined using custom spectral analysis automation programs. All chemical shifts are internally referenced to the bulk methylene signal ($\delta+$) at 30.00 ppm {[9]}.

Characteristic signals corresponding to the incorporation of 1-hexene were observed {[9]} and all contents calculated with respect to all other monomers present in the polymer.

$$H = I_{*B4}$$

With no other signals indicative of other comonomer sequences, i.e. consecutive comonomer incorporation, observed the total 1-hexene comonomer content was calculated based solely on the amount of isolated 1-hexene sequences:

$$H_{total} = H$$

Characteristic signals resulting from saturated end-groups were observed. The content of such saturated end-groups was quantified using the average of the integral of the signals at 22.84 and 32.23 ppm assigned to the 2s and 3s sites respectively:

$$S = (1/2)^*(I_{2S} + I_{3S})$$

The relative content of ethylene was quantified using the integral of the bulk methylene ($\delta+$) signals at 30.00 ppm:

$$E = (1/2)^*I_{\delta+}$$

The total ethylene comonomer content was calculated based on the bulk methylene signals and accounting for ethylene units present in other observed comonomer sequences or end-groups:

$$E_{total} = E + (5/2)^*B + (3/2)^*S$$

The total mole fraction of 1-hexene in the polymer was then calculated as:

$$fH = (H_{total} / (E_{total} + H_{total}))$$

The total comonomer incorporation of 1-hexene in mole percent was calculated from the mole fraction in the usual manner:

$$H \ [mol\%] = 100 * fH$$

The total comonomer incorporation of 1-hexene in weight percent was calculated from the mole fraction in the standard manner:

$$H \ [wt\%] = 100 * (fH * 84.16) / ( \ (fH * 84.16) + ((1\text{-}fH) * 28.05) \ )$$

*References:*

[1] Klimke, K., Parkinson, M., Piel, C., Kaminsky, W., Spiess, H.W., Wilhelm, M., Macromol. Chem. Phys. 2006; 207:382.

[2] Parkinson, M., Klimke, K., Spiess, H.W., Wilhelm, M., Macromol. Chem. Phys. 2007; 208:2128.

[3] Pollard, M., Klimke, K., Graf, R., Spiess, H.W., Wilhelm, M., Sperber, O., Piel, C., Kaminsky, W., Macromolecules 2004; 37:813.

[4] Filip, X., Tripon, C., Filip, C., J. Mag. Reson. 2005, 176, 239.

[5] Griffin, J.M., Tripon, C., Samoson, A., Filip, C., and Brown, S.P., Mag. Res. in Chem. 2007, 45, S1, S198.

[6] Castignolles, P., Graf, R., Parkinson, M., Wilhelm, M., Gaborieau, M., Polymer 50 (2009) 2373.

[7] Zhou, Z., Muemmerle, R., Qiu, X., Redwine, D., Cong, R., Taha, A., Baugh, D. Winniford, B., J. Mag. Reson. 2007, 187, 225.

[8] Busico, V., Carbonniere, P., Cipullo, R., Pellecchia, R., Severn, J., Talarico, G., Macromol. Rapid Commun. 2007, 28, 1128.

[9] J. Randall, Macromol. Sci., Rev. Macromol. Chem. Phys. 1989, C29, 201.

*d) Rheological parameters*

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190 °C applying a frequency range between 0.01 and 600 rad/s and setting a gap of 1.3 mm.
In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \ \sin(\omega t) \qquad\qquad (1)$$

If the applied strain is within the linear viscoelastic regime, the resulting sinusoidal stress response can be given by

$$\sigma(t) = \sigma_0 \ \sin(\omega t + \delta) \qquad\qquad (2)$$

where $\sigma_0$, and $\gamma_0$ are the stress and strain amplitudes, respectively; $\omega$ is the angular frequency; $\delta$ is the phase shift (loss angle between applied strain and stress response); t is the time.
Dynamic test results are typically expressed by means of several different rheological functions, namely the shear storage modulus, G', the shear loss modulus, G", the complex shear modulus, G*, the complex shear viscosity, $\eta$*, the dynamic shear viscosity, $\eta$', the out-of-phase component of the complex shear viscosity, $\eta$" and the loss tangent, tan $\eta$, which can be expressed as follows:

$$G' = \frac{\sigma_0}{\gamma_0} \cos\delta \; [Pa] \qquad (3)$$

$$G'' = \frac{\sigma_0}{\gamma_0} \sin\delta \; [Pa] \qquad (4)$$

$$G^* = G' + iG'' \; [Pa] \qquad (5)$$

$$\eta^* = \eta' - i\eta'' \; [Pa\cdot s] \qquad (6)$$

$$\eta' = \frac{G''}{\omega} \; [Pa\cdot s] \qquad (7)$$

$$\eta'' = \frac{G'}{\omega} \; [Pa\cdot s] \qquad (8)$$

The determination of so-called Shear Thinning Index, which correlates with MWD and is independent of Mw, is done as described in equation 9.

$$SHI_{(x/y)} = \frac{Eta^* \; for \; (G^* = x \; kPa)}{Eta^* \; for \; (G^* = y \; kPa)} \qquad (9)$$

For example, the $SHI_{(2.7/210)}$ is defined by the value of the complex viscosity, in Pa s, determined for a value of G* equal to 2.7 kPa, divided by the value of the complex viscosity, in Pa s, determined for a value of G* equal to 210 kPa.

The values of storage modulus (G'), loss modulus (G"), complex modulus (G*) and complex viscosity ($\eta$*) were obtained as a function of frequency ($\omega$).

Thereby, e.g. $\eta^*_{300rad/s}$ (eta*$_{300rad/s}$) is used as abbreviation for the complex viscosity at the frequency of 300 rad/s and $\eta^*_{0.05rad/s}$ (eta*$_{0.05rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $tan_{0.05}$ is used as abbreviation for the ratio of the loss modulus (G") and the storage modulus (G') at 0.05 rad/s and $tan_{300}$ is used as abbreviation for the ratio of the loss modulus (G") and the storage modulus (G') at 300 rad/s.

The elasticity balance $tan_{0.05}/tan_{300}$ is defined as the ratio of the loss tangent $tan_{0.05}$ and the loss tangent $tan_{300}$.

Besides the above mentioned rheological functions one can also determine other rheological parameters such as the so-called elasticity index *EI(x)*. The elasticity index *EI(x)* is the value of the storage modulus (G') determined for a value of the loss modulus (G") of x kPa and can be described by equation 10.

$$EI(x) = G' \; for \; (G'' = x \; kPa) \; [Pa] \qquad (10)$$

For example, the *EI*(5kPa) is the defined by the value of the storage modulus G', determined for a value of G" equal to 5 kPa.

The viscosity eta$_{747}$ is measured at a very low, constant shear stress of 747 Pa and is inversely proportional to the gravity flow of the polyethylene composition, i.e. the higher eta$_{747}$ the lower the sagging of the polyethylene composition.

The polydispersity index, *PI,* is defined by equation 11.

$$PI = \frac{10^5}{G'(\omega_{COP})}, \qquad \omega_{COP} = \omega \text{ for } (G' = G'') \qquad (11)$$

where $\omega_{COP}$ is the cross-over angular frequency, determined as the angular frequency for which the storage modulus, G', equals the loss modulus, G''.

The values are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus "- *Interpolate y-values to x-values from parameter"* and the *"logarithmic interpolation type"* were applied.

*References:*

[1] "Rheological characterization of polyethylene fractions", Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362.
[2] "The influence of molecular structure on some rheological properties of polyethylene", Heino, E.L., Borealis Polymers Oy, Porvoo, Finland, Annual Transactions of the Nordic Rheology Society, 1995.
[3] "Definition of terms relating to the non-ultimate mechanical properties of polymers", Pure & Appl. Chem., Vol. 70, No. 3, pp. 701-754, 1998.

e) *Molecular weight*

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i / M_i)} \qquad (1)$$

$$M_w = \frac{\sum_{i=1}^{N} (A_i \times M_i)}{\sum A_i} \qquad (2)$$

$$M_z = \frac{\sum_{i=1}^{N} (A_i \times M_i^2)}{\sum (A_i / M_i)} \qquad (3)$$

For a constant elution volume interval $\Delta V_i$, where $A_i$ and $M_i$ are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 μL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

f) *Pressure test on notched pipes (NPT)*

The slow crack propagation resistance is determined according to ISO 13479-2009 in terms of the number of hours the pipe withstands a certain pressure at a certain temperature before failure. The pressure test is carried out on notched SDR11 pipes having an outer diameter of 110 mm. A pressure of 9.2 bars and a temperature of 80 °C have been used. Notching is made with a climb milling cutter with a 60° included-angle V-cutter conforming to ISO 6108, having a cutting rate of $0.010 \pm 0.002$ (mm/rev)/tooth. The used cutter has 24 teeth and the speed of the cutter is 680 rpm. The remaining ligament is 0.82-0.78 times the minimum wall thickness. The depth of the notch is calculated using equation below. h is the notch depth in mm. The four notches are equally placed in the pipe circumference.

The length of the notch is $110 \pm 1$ mm.

$$h = 0.5 \left[ d_{em} - \sqrt{(d_{em}^2 - b_S^2)} \right] + 0.866\, b_S$$

where

$b_s$ is the width of machined surface of the notch in mm;

$d_{em}$ is the measured mean pipe outside diameter in mm.

*g) Mg, Al and Ti content / ICP analysis*

The elemental analysis of a catalyst was performed by taking a solid sample of mass, M. Samples were diluted up to a known volume, V, by dissolving in nitric acid ($HN0_3$, 65 %, 5 % of V) and freshly deionised (DI) water (5 % of V). The solution was further treated with hydrofluoric acid (HF, 40 %, 3 % of V) and diluted with DI water up to the final volume, V, and left to stabilize for two hours.

The analysis was run at room temperature using a Thermo Elemental iCAP 6300 Inductively Coupled Plasma - Optical Emission Spectrometer (ICP-OES) which was calibrated using a blank (a solution of 5 % $HN0_3$ and 3 % HF), and standards of 0.5 ppm, 1 ppm, 10 ppm, 50 ppm, 100 ppm and 300 ppm of Al, Mg and Ti in solutions of 5 % $HN0_3$ and 3 % HF.

Immediately before analysis the calibration is 'resloped' using the blank and 100 ppm standard, a quality control sample (20 ppm Al, Mg and Ti in a solution of 5 % $HN0_3$, 3 % HF in DI water) is run to confirm the reslope. The QC sample is also run after every $5^{th}$ sample and at the end of a scheduled analysis set.

The content of Mg was monitored using the 285.213 nm line and the content for Ti using 336.121 nm line. The content of aluminium was monitored via the 167.079 nm line, when the Al concentration in the ICP sample was between 0-10 ppm (calibrated only to 100 ppm) and via the 396.152 nm line for Al concentrations above 10 ppm.

The reported values are an average of three successive aliquots taken from the same sample and are related back to the original catalyst by inputting the original mass of sample and the dilution volume into the software.

*h) Particle size of the catalyst*

Particle size is measured by Coulter Counter LS 200 at room temperature with n-heptane as medium.

*i) Rapid crack propagation*

The rapid crack propagation (RCP) resistance of a pipe may be determined according to a method called the S4 test (Small Scale Steady State), which has been developed at Imperial College, London, and which is described in ISO 13477:2008. The outer diameter of the pipe is about 110 mm or greater and its wall thickness about 10 mm or greater. When determining the RCP properties of a pipe in connection with the present invention, the outer diameter and the wall thickness have been selected to be 110 mm and 10 mm, respectively. The length of the pipe is 785 mm. While the exterior of the pipe is at ambient pressure (atmospheric pressure), the pipe is pressurised internally, and the internal pressure in the pipe is kept constant at a pressure of 4.0 bar positive pressure. The length of the gauge is 590 mm. The pipe and the equipment surrounding it are conditioned to a predetermined temperature. A number of discs have been mounted on a shaft inside the pipe to prevent decompression during the tests. A knife projectile is shot, with well-defined forms, and a mass of 1500 g towards the pipe close to its one end in the so-called initiating zone in order to start a rapidly running axial crack. The speed of the knife is 16 +/-1 m/s. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 diameters, is measured for each test and is plotted against the set test temperature. If the crack length exceeds 4.7 diameters, the crack is assessed to propagate. If the pipe passes the test at a given temperature, the temperature is lowered successively until a temperature is reached, at which the pipe no longer passes the test where the crack propagation exceeds 4.7 times the pipe diameter. The critical temperature ($T_{crit}$) i.e. the ductile brittle transition temperature as measured according to ISO 13477:2008 is the lowest temperature at which the pipe passes the test. A lower critical temperature results in an extension of the applicability of the pipe.

*j) Charpy impact strength*

Charpy impact strength was determined according to ISO179/1eA:2000 on V-notched samples of 80*10*4 mm at 0 °C (Charpy impact strength (0 °C)) and - 20 °C (Charpy impact strength (-20 °C)). Samples were milled from plaques of 4 mm thickness prepared by compression molding according to ISO 293:2004 using the conditions defined in chapter 3.3 of ISO 1872-2:2007.

*k) Tensile modulus*

As a measure for stiffness, the tensile modulus (E-modulus) of the compositions was measured at 23 °C on compression molded specimens according to ISO 527-2:1993. The specimens (1B type) were milled from plaques of 4 mm thickness prepared by compression molding according to ISO 293:2004 using the conditions defined in chapter 3.3 of ISO 1872-2:2007. The modulus was measured at a speed of 1 mm/min.

2. Preparation of the catalyst

*a) Complex preparation:*

87 kg of toluene were added into the reactor. Then 45.5 kg Bomag A (butyloctyl magnesium) in heptane were also added in the reactor. 161 kg 99.8 % 2-ethyl-1-hexanol were then introduced into the reactor at a flow rate of 24 to 40 kg/h. The molar ratio between BOMAG-A and 2-ethyl-1-hexanol was 1: 1.83.

*b) Solid catalvst component preparation:*

330 kg silica (calcined silica, Sylopol® 2100) and pentane (0.12 kg/kg carrier) were charged into a catalyst preparation reactor. Then EADC (Ethylaluminium dichloride) (2.66 mol/kg silica) was added into the reactor at a temperature of below 40 °C during two hours and mixing was continued for one hour. The temperature during mixing was 40 - 50 °C. Then the Mg complex prepared as described above was added (2.56 mol Mg/kg silica) at 50 °C during two hours and mixing was continued at 40 - 50 °C for one hour. 0.84 kg pentane/kg silica was added into the reactor and the slurry was stirred for 4 hours at the temperature of 40 - 50 °C. Finally, $TiCl_4$ (1.47 mol/kg silica) was added during at least 1 hour at 55 °C to the reactor. The slurry was stirred at 50 - 60 °C for five hours. The catalyst was then dried by purging with nitrogen.

Molar composition of the ready catalyst component is:

$$Al/Mg/Ti = 1.5/1.4/0.8 \text{ (mol/kg silica).}$$

3. Multi-stage polymerization for inventive examples IE1 to IE3

A loop reactor having a volume of 500 $dm^3$ was operated at 95 °C and 58 bar pressure. Into the reactor were introduced 84 kg/h of propane diluent, ethylene and a gas mixture containing 25 vol.-% of hydrogen in nitrogen with the feed rates as given in the Table. In addition, polymerization catalyst prepared according to the description above was introduced into the reactor at a rate as given in the Table. TEA used as cocatalyst was also fed to the loop reactor. No comonomer was introduced into the reactor. Conditions in the reactor are shown in Table 1.

The polymer slurry was withdrawn from the loop reactor and transferred into a flash vessel operated at 3 bar pressure and 70 °C temperature where the hydrocarbons were substantially removed from the polymer. The polymer was then introduced into a first gas phase reactor operated at a temperature of 85 °C and a pressure of 20 bar.

The polymerization was continued with the conditions shown in Table 1.

The resulting polymer was stabilized with 2200 ppm of Irganox B225 and 1500 ppm Ca-stearate and 2.3 % of carbon black, based on the final composition. For addition of carbon black a masterbatch containing 39.5 wt.% carbon black (Elftex TP, distributed by Cabot), 0.1 wt.% Irganox 1010 (from Ciba, now part of BASF) and 60.4 wt.% ethylene-butylene copolymer having a comonomer content of 1.7 wt.%, an $MFR_2$ (2.16 kg, 190°C, ISO 1133) of 30 g/10 min and a density of 959 $kg/m^3$ in an amount of 5.7 wt% has been used. Then extruded to pellets in a counter-rotating twin screw extruder CIM90P (manufactured by Japan Steel Works). The conditions are given in Table 1.

4. Multi-stage polymerization for inventive example IE5

The reaction sequence as described above was repeated with the difference that a pre-polymerization step was added. Catalyst and cocatalyst TEA were fed to the pre-polymerization vessel.

5. Comparative Examples CE1 to CE5

The polymerization was repeated using the commercially available catalyst Lynx200 by BASF. Again TEA was used as cocatalyst. As can be seen from the data in Table 1, this catalyst results in a significantly different balance of properties.

6. Long term hydrostatic strength measurement

The materials of example IE 5 and comparative examples CE1 and CE4 were made into pipes (32x3 mm) and subjected to pressure testing (according to ISO1167-1 end caps type A).
The Minimum Required Strength (MRS) is the circumferential stress a pipe withstands for 50 years without failure according to ISO9080-2003. Thus, MRS 11.0 means that the pipe withstands a hoop stress of 11.0 MPa gauge for 50 years at 20°C. Example IE5 had a MRS of 11.6 measured according to ISO/ TR 9080 at 20°C and a MRS of 10.4 measured at 40°C (higher temperature is not relevant). The comparative examples CE1 and CE4 showed MRS values being at least 10% lower than the values obtained for IE5.

Table 1: Polymerization conditions and test results

| | IE1 | IE2 | IE3 | IE5 | CE1 | CE2 | CE3 | CE4 | CE5 |
|---|---|---|---|---|---|---|---|---|---|
| | 3470 | 3471 | 3472 | 3474 | 3383 | 3384 | 3387 | 3391 | 3394 |
| Catalyst inventive (= i) comparative (= c) | i | i | i | i | c | c | c | c | c |
| Cocatalyst | TEA | TEA | TEA | TEA | TEA | TEA | TEA | TEA | TEA |
| Pre-polymerizer | off | off | off | on | on | on | off | off | off |
| Temperature [°C] | | | | 60 | 60 | 60 | | | |
| Pressure [bar] | | | | 62 | 61 | 62 | | | |
| Catalyst feed [g/h] | | | | 8.3 | 1.5 | 1.2 | | | |
| Cocatalyst feed [g/h] | | | | 4.1 | 1.4 | 1.0 | | | |
| Al/Ti [mol/mol] | | | | 11 | 12 | 11 | | | |
| $C_2$ feed [kg/h] | | | | 2.0 | 2.0 | 2.0 | | | |
| $H_2$ feed [g/h] | | | | 3.9 | 10.1 | 9.4 | | | |
| $C_3$ feed [g/h] (solvent) | | | | 50 | 48 | 51 | | | |
| Production rate [kg/h] | | | | 1.9 | 1.9 | 1.9 | | | |
| Split [wt.-%] | | | | 2.7 | 2.3 | 2.5 | | | |
| **Loop reactor** | | | | | | | | | |
| Temperature [°C] | 95 | 95 | 95 | 95 | 95 | 95 | 95 | 95 | 95 |
| Pressure [bar] | 58 | 58 | 58 | 58 | 58 | 57 | 58 | 58 | 58 |
| Catalyst feed [g/h] | 10.7 | 10.8 | 10.8 | | | | 1.3 | 1.2 | 1.3 |

(continued)

| | IE1 | IE2 | IE3 | IE5 | CE1 | CE2 | CE3 | CE4 | CE5 |
|---|---|---|---|---|---|---|---|---|---|
| | 3470 | 3471 | 3472 | 3474 | 3383 | 3384 | 3387 | 3391 | 3394 |
| Cocatalyst feed [g/h] | 9.2 | 9.3 | 9.3 | | | | 2.0 | 2.2 | 2.0 |
| Al/Ti [mol/mol] | 10 | 10 | 10 | | | | 10 | 12 | 10 |
| $C_2$ feed [kg/h] | 40 | 39 | 39 | 38 | 43 | 40 | 42 | 42 | 41 |
| $H_2$ feed [g/h] | 125 | 120 | 113 | 114 | 149 | 150 | 164 | 159 | 148 |
| $C_3$ feed [kg/h] (solvent) | 120 | 121 | 117 | 120 | 83 | 91 | 95 | 97 | 99 |
| $H_2/C_2$ ratio [mol/kmol) | 469 | 481 | 468 | 522 | 696 | 661 | 707 | 706 | 705 |
| $C_2$ conc.[mol-%] | 3.8 | 3.6 | 3.6 | 3.4 | 3.8 | 3.8 | 3.6 | 3.8 | 3.4 |
| Split [wt.-%] | 51.8 | 51.6 | 52.0 | 49.9 | 51.9 | 49.0 | 52.4 | 52.5 | 51.8 |
| $MFR_2$ [g/10 min] | 404 | 400 | 456 | 576 | 388 | 424 | 472 | 381 | 336 |
| **1st Gas phase reactor:** | | | | | | | | | |
| Temperature [°C] | 85 | 85 | 85 | 85 | 85 | 85 | 85 | 85 | 85 |
| Pressure [bar] | 20 | 20 | 20 | 20 | 20 | 20 | 20 | 20 | 20 |
| Cocatalyst feed [g/h] | 0 | 0 | 0 | 0 | 0 | 0 | 0 | 0 | 0 |
| $C_2$ feed [kg/h] | 38 | 38 | 37 | 37 | 49 | 45 | 47 | 46 | 47 |
| $H_2$ feed [g/h] | 0.00 | 0.99 | 0.97 | 1.36 | 14.51 | 21.44 | 35.84 | 20.00 | 51.76 |
| $C_6$ feed [kg/h] | 1.06 | 1.02 | 0.94 | 1.05 | 1.67 | 1.87 | 2.17 | 1.78 | 0.80 |
| $H_2/C_2$ ratio [mol/kmol] | 1.94 | 4.94 | 4.13 | 4.88 | 17.53 | 31.10 | 41.37 | 24.04 | 57.28 |
| $C_6/C_2$ ratio [mol/kmol] | 27.9 | 26.4 | 23.7 | 23.9 | 25.1 | 40.9 | 39.8 | 34.3 | 13.7 |
| $C_6/H_2$ feed ratio [g/kg PE] | 28 | 27 | 25 | 28 | 34 | 42 | 46 | 39 | 17 |
| C2-concentration [mol-%] | 8.7 | 7.4 | 7.2 | 8.0 | 13.5 | 12.6 | 12.3 | 13.8 | 12.0 |
| Split [wt.-%] | 48.2 | 48.4 | 48.0 | 47.4 | 48.1 | 48.4 | 47.6 | 47.5 | 48.2 |
| Density [kg/m$^3$] | 953.8 | 952.2 | 952.7 | 952.3 | 952.2 | 949.3 | 950.8 | 950.9 | 955.4 |
| $C_6$ content [wt.-%] | 0.7 | 0.8 | 0.7 | 0.5 | 0.8 | 1.0 | 1.0 | 0.7 | 0.2 |
| **Compounding:** | | | | | | | | | |
| Feed [kg/h] | 220 | 221 | 208 | 220 | 221 | 221 | 221 | 221 | 222 |
| Screw Speed [rpm] | 349 | 349 | 330 | 349 | 350 | 380 | 349 | 328 | 357 |
| SEI [kWh/to] (consumed electric energy) | 241 | 224 | 214 | 218 | 245 | 227 | 227 | 237 | 221 |

(continued)

| | IE1 | IE2 | IE3 | IE5 | CE1 | CE2 | CE3 | CE4 | CE5 |
|---|---|---|---|---|---|---|---|---|---|
| | 3470 | 3471 | 3472 | 3474 | 3383 | 3384 | 3387 | 3391 | 3394 |
| Melt temperature [°C] | 259 | 256 | 254 | 253 | 265 | 255 | 260 | 259 | 243 |
| Zone 1 temperature [°C] | 100 | 100 | 100 | 100 | 100 | 100 | 100 | 100 | 100 |
| Zone 2 temperature [°C] | 200 | 200 | 200 | 200 | 200 | 200 | 200 | 200 | 200 |
| Zone 3 temperature [°C] | 250 | 250 | 250 | 250 | 250 | 250 | 250 | 250 | 250 |
| Zone 4 temperature [°C] | 180 | 180 | 180 | 180 | 180 | 180 | 180 | 180 | 180 |
| Composition properties | | | | | | | | | |
| Density [kg/m$^3$] | 963.8 | 962.4 | 964.0 | 965.8 | 964.6 | 962.2 | 962.0 | 963.4 | 964.8 |
| MFR$_5$ [g/10 min] | 0.18 | 0.18 | 0.18 | 0.18 | 0.22 | 0.33 | 0.41 | 0.19 | 0.33 |
| MFR$_{21}$ [g/10 min] | 10.1 | 8.9 | 9.0 | 8.9 | 10.0 | 11.0 | 14.6 | 8.0 | 12.6 |
| FRR$_{21/5}$ | 56.1 | 49.4 | 50.0 | 49.4 | 45.5 | 33.3 | 35.6 | 42.1 | 38.2 |
| PI [Pa$^{-1}$] | 4.8 | 3.7 | 3.7 | 3.9 | 3.4 | 3.2 | 3.7 | 3.3 | 3.5 |
| complex viscosity eta at 0.05 rad/s [Pa·s] | 2.645· 10$^5$ | 2.342· 10$^5$ | 2.354· 10$^5$ | 2.512· 10$^5$ | 1.758· 10$^5$ | 1.277· 10$^5$ | 1.906· 10$^5$ | 1.059· 10$^5$ | 1.308· 10$^5$ |
| complex viscosity eta at 300 rad/s [Pa·s] | 1053 | 1162 | 1163 | 1165 | 1140 | 1085 | 1112 | 957 | 1018 |
| Eta$_{747}$ [Pa·s] | 9.7·10$^5$ | 7.8·10$^5$ | 7.3·10$^5$ | 9.0·10$^5$ | | | 2.9·10$^5$ | 7.4·10$^5$ | 4.7·10$^5$ |
| G' (5 kPa) [Pa] | 3126 | 2849 | 2867 | 3096 | 2927 | 2912 | 3016 | 2819 | 3103 |
| G' (2 kPa) [Pa] | 918 | 963 | 979 | 991 | 1035 | 1019 | 1057 | 938 | 1073 |
| SHI$_{2.7/210}$ | 180 | 94 | 94 | 113 | 73 | 60 | 89 | 67 | 76 |
| SH1$_{1/100}$ | 53 | 32 | 32 | 40 | 28 | 25 | 33 | 24 | 30 |
| NPT (9.2 bar/ 80°C) [h] (average of two measurements) | 2919 | 3084 | 2371 | 1715 | 1015 | 1430 | 1048 | 1493 | nd |
| NPT rating | ++ | ++ | + | + | - | +/- | - | +/- | nd |
| S4 [T$_c$/°C] | -21.9 | -20.5 | -23.1 | -22.4 | -26.3 | -11.6 | -6.6 | -14.8 | -21.0 |
| S4 rating | + | + | ++ | ++ | ++ | - | -- | - | + |
| Tensile modulus [MPa] | 1218 | 1206 | 1243 | 1260 | | | 1176 | 1192 | 1319 |
| Tensile stress at yield [MPa] | 28 | 28 | 28 | 28 | | | 27 | 27 | 29 |
| Tensile strain at yield [%] | 9 | 9 | 9 | 8 | | | 9 | 9 | 8 |

(continued)

| | IE1 | IE2 | IE3 | IE5 | CE1 | CE2 | CE3 | CE4 | CE5 |
|---|---|---|---|---|---|---|---|---|---|
| | 3470 | 3471 | 3472 | 3474 | 3383 | 3384 | 3387 | 3391 | 3394 |
| Tensile strength [MPa] | 28 | 29 | 28 | 28 | | | 27 | 27 | 29 |
| | | | | | | | | | |
| Tensile stress at break [MPa] | 20 | 27 | 16 | 19 | | | 18 | 15 | 9 |
| Tensile strain at break [%] | 524 | 593 | 401 | 509 | | | 490 | 380 | 216 |
| Impact strength [kJ/m$^2$] temperature 0°C | 19.9 | 21.4 | 20.6 | 19.3 | 15.8 | | 13.1 | 19.9 | 15.1 |
| Impact strength [kJ/m$^2$] temperature -20°C: | 11.7 | 12.8 | 10.5 | 9.3 | 7.9 | | 7.2 | 10.3 | 9.4 |
| n.d.: not determined | | | | | | | | | |

## Claims

1. A polyethylene composition comprising
   a base resin having a density of more than 952.0 kg/m$^3$ and equal to or less than 957.0 kg/m$^3$, determined according to ISO 1183-1:2004, and a content of units derived from 1-hexene of 0.45 to 0.95 wt.-%, wherein the composition has a melt flow rate MFR$_5$ (190 °C, 5 kg) of 0.12 to 0.21 g/10min, determined according to ISO 1133 and the composition and/or base resin has a polydispersity index PI within the range of equal to or higher than 3.5 Pa$^{-1}$ and equal to or less than 4.9 Pa$^{-1}$.

2. The polyethylene composition according to claim 1, wherein the polyethylene composition and/or base resin has a shear thinning index SHI$_{2.7/210}$ of 85 to 200.

3. The polyethylene composition according to claim 1 or 2, wherein polyethylene composition and/or base resin has an extrapolated shear thinning index SH1$_{1/100}$ of 31 to 60.

4. The polyethylene composition according to any of the preceding claims having a density of more than 963.0 kg/m$^3$ and equal to or less than 971.0 kg/m$^3$, determined according to ISO 1183-1:2004.

5. The polyethylene composition according to any of the preceding claims wherein the composition and/or the base resin has a storage modulus G' (2 kPa) of 850 Pa to 1000 Pa.

6. The polyethylene composition according to any of the preceding claims having a melt flow rate MFR$_{21.6}$ (190 °C, 21.6 kg) of 7.0 to 13.0 g/10min, determined according to ISO 1133.

7. The polyethylene composition according to any of the preceding claims, wherein the composition has a flow rate ratio FRR$_{21/5}$, being the ratio of MFR$_{21}$ to MFR$_5$, of 40 to 65.

8. The polyethylene composition according to any of the preceding claims, wherein the base resin comprises at least two ethylene homo- or copolymer fractions (A) and (B) being different in their weight average molecular weight M$_w$. wherein fraction (A) is an ethylene homopolymer and fraction (B) is a copolymer of ethylene and 1-hexene, whereby fraction (A) has a melt flow rate MFR$_2$ (190 °C, 2.16 kg) of 380 to 600 g/10min, and wherein fraction (A) is present in an amount of 46 to 52 wt.-% with respect to the base resin.

9. A polyethylene composition obtainable by a multistage process, the multistage process comprising

   a) polymerizing ethylene in the presence of

      (i) a silica supported Ziegler Natta catalyst having a molar composition of the catalyst including

      | | |
      |---|---|
      | Al | 1.30 to 1.65 mol/kg silica, |
      | Mg | 1.25 to 1.61 mol/kg silica, |
      | Ti | 0.70 to 0.90 mol/kg silica, |

      and having a mean particle size (D50) of 7 to 15 $\mu$m,
      (ii) in a loop reactor in the presence of an alkyl aluminium compound and a chain transfer agent for obtaining an intermediate material, the intermediate material having a melt flow rate $MFR_2$ (190 °C, 2.16 kg) of 380 to 600 g/10min; and

   b) transferring the intermediate material to a gas phase reactor

      (i) feeding ethylene and 1-hexene to the gas phase reactor
      (ii) further polymerizing the intermediate material to obtain a base resin having a density of more than 951 kg/m$^3$ and equal to or less than 957 kg/m$^3$, determined according to ISO 1183-1:2004, and having a content of units derived from 1-hexene of 0.45 to 0.95 wt.-%

   c) extruding the base resin into a polyethylene composition having a melt flow rate $MFR_5$ (190 °C, 5 kg) of 0.12 to 0.21 g/l 10 min, determined according to ISO 1133 and a base resin having a polydispersity index PI within the range of equal to or higher than 3.5 Pa$^{-1}$ and equal to or less than 4.9 Pa$^{-1}$ in the presence of stabilizers and carbon black.

10. An article comprising the polyethylene composition according to any of claims 1 to 9.

11. The article according to claim 10 being a pipe or pipe fitting.

12. The pipe according to claim 11 having a slow crack growth resistance in the Notched Pipe Test of at least 2300 h, determined according to ISO 13479 at a pressure of 9.2 bar and 80 °C.

13. The pipe according to claims 11 or 12 having a S4 critical temperature of - 20.0 °C or lower.

14. Use of a polyethylene composition according to any of claims 1 to 9 for the production of an article.


**Patentansprüche**

1. Polyethylenzusammensetzung, umfassend
   ein Basisharz, das eine Dichte von mehr als 952,0 kg/m$^3$ und gleich zu oder weniger als 957,0 kg/m$^3$, bestimmt gemäß ISO 1183-1:2004, und einen Gehalt an Einheiten, die sich von 1-Hexen ableiten, von 0,45 bis 0,95 Gew.-% aufweist,
   wobei die Zusammensetzung einen Schmelzflussindex $MFR_5$ (190 °C, 5 kg) von 0,12 bis 0,21 g/10 min aufweist, bestimmt gemäß ISO 1133, und die Zusammensetzung und/oder das Basisharz einem Polydispersitätsindex PI innerhalb des Bereichs von gleich zu oder höher als 3,5 Pa$^{-1}$ und gleich zu oder weniger als 4,9 Pa$^{-1}$ aufweist.

2. Polyethylenzusammensetzung nach Anspruch 1, wobei die Polyethylenzusammensetzung und/oder das Basisharz einen Strukturviskositätsindex $SHI_{2,7/210}$ von 85 bis 200 aufweist.

3. Polyethylenzusammensetzung nach Anspruch 1 oder 2, wobei die Polyethylenzusammensetzung und/oder das Basisharz einen extrapolierten Strukturviskositätsindex $SHI_{1/100}$ von 31 bis 60 aufweist.

4. Polyethylenzusammensetzung nach einem der vorhergehenden Ansprüche, die eine Dichte von mehr als 963,0 kg/m$^3$ und gleich zu oder weniger als 971,0 kg/m$^3$ aufweist, bestimmt gemäß ISO 1183-1:2004.

**5.** Polyethylenzusammensetzung nach einem der vorhergehenden Ansprüche, wobei die Zusammensetzung und/oder das Basisharz einen Speichermodul G' (2 kPa) von 850 Pa bis 1000 Pa aufweist.

**6.** Polyethylenzusammensetzung nach einem der vorhergehenden Ansprüche, die einen Schmelzflussindex $MFR_{21,6}$ (190 °C, 21,6 kg) von 7,0 bis 13 g/10 min aufweist, bestimmt gemäß ISO 1133.

**7.** Polyethylenzusammensetzung nach einem der vorhergehenden Ansprüche, wobei die Zusammensetzung ein Flussindexverhältnis $FRR_{21/5}$ von 40 bis 65 aufweist, das das Verhältnis von dem $MFR_{21}$ zu dem $MFR_5$ ist.

**8.** Polyethylenzusammensetzung nach einem der vorhergehenden Ansprüche, wobei das Basisharz mindestens zwei Ethylenhomo- oder -copolymerfraktionen (A) und (B) aufweist, die sich in ihren Gewichtsmittels des Molekulargewichts $M_w$ unterscheiden,
wobei die Fraktion (A) ein Ethylenhomopolymer und die Fraktion (B) ein Copolymer von Ethylen und 1-Hexen ist,
wobei die Fraktion (A) einen Schmelzflussindex $MFR_2$ (190 °C, 2,16 kg) von 380 bis 600 g/10 min aufweist, und
wobei die Fraktion (A) mit einer Menge von 46 bis 52 Gew.-% in Bezug auf das Basisharz vorliegt.

**9.** Polyethylenzusammensetzung, erhältlich durch ein mehrstufiges Verfahren, wobei das mehrstufige Verfahren das Folgende umfasst:

    a) Polymerisieren von Ethylen in Gegenwart von

        (i) einem silikageträgerten Ziegler-Natta-Katalysator, der eine molare Zusammensetzung von dem Katalysator aufweist, umfassend

| | |
|---|---|
| Al | 1,30 bis 1,65 mol/kg Silika, |
| Mg | 1,25 bis 1,61 mol/kg Silika, |
| Ti | 0,70 bis 0,90 mol/kg Silika, |

        und der eine mittlere Partikelgröße (D50) von 7 bis 15 $\mu$m aufweist,
        (ii) in einem Schlaufenreaktor in Gegenwart von einer Alkylaluminiumverbindung und einem Kettenüberträger zum Erhalten von einem Zwischenmaterial, wobei das Zwischenmaterial einen Schmelzflussindex $MFR_2$ (190 °C, 2,16 kg) von 380 bis 600 g/10 min aufweist; und

    b) Überführen von dem Zwischenmaterial zu einem Gasphasenreaktor

        (i) Zuführen von Ethylen und 1-Hexen zu dem Gasphasenreaktor
        (ii) weiteres Polymerisieren von dem Zwischenmaterial, um ein Basisharz zu erhalten, das eine Dichte von mehr als 951 kg/m$^3$ und gleich zu oder weniger als 957 kg/m$^3$, bestimmt gemäß ISO 1183-1:2004, und einen Gehalt an Einheiten, die sich von 1-Hexen ableiten, von 0,45 bis 0,95 Gew.-% aufweist,

    c) Extrudieren von dem Basisharz in eine Polyethylenzusammensetzung, die einen Schmelzflussindex $MFR_5$ (190 °C, 5 kg) von 0,12 bis 0,21 g/10 min aufweist, bestimmt gemäß ISO 1133, und ein Basisharz aufweist, das einen Polydispersitätsindex PI innerhalb des Bereichs von gleich zu oder höher als 3,5 Pa$^{-1}$ und gleich zu oder weniger als 4,9 Pa$^{-1}$ aufweist, in Gegenwart von Stabilisatoren und Ruß.

**10.** Artikel, umfassend die Polyethylenzusammensetzung nach einem der Ansprüche 1 bis 9.

**11.** Artikel nach Anspruch 10, der ein Rohr oder Rohranschlussstück ist.

**12.** Rohr nach Anspruch 11, das eine Beständigkeit gegenüber langsamen Risswachstum in einem gekerbten Rohrtest von mindestens 2300 h aufweist, bestimmt gemäß ISO 13479 bei einem Druck von 9,2 bar und 80 °C.

**13.** Rohr nach Anspruch 11 oder 12, das eine S4 kritische Temperatur von -20,0 °C oder weniger aufweist.

**14.** Verwendung von einer Polyethylenzusammensetzung nach einem der Ansprüche 1 bis 9 zum Herstellen von einem Artikel.

**Revendications**

1. Composition de polyéthylène comprenant
une résine de base ayant une masse volumique supérieure à 952,0 kg/m$^3$ et inférieure ou égale à 957,0 kg/m$^3$, déterminée selon la norme ISO 1183-1:2004, et une teneur en motifs dérivés du 1-hexène de 0,45 à 0,95 % en poids, dans laquelle la composition a un indice de fluidité à chaud MFR$_5$ (190 °C, 5 kg) de 0,12 à 0,21 g/10 min, déterminé selon la norme ISO 1133 et
la composition et/ou la résine de base a un indice de polydispersité PI dans la plage supérieure ou égale à 3,5 Pa$^{-1}$ et inférieure ou égale à 4,9 Pa$^{-1}$.

2. Composition de polyéthylène selon la revendication 1, dans laquelle la composition de polyéthylène et/ou la résine de base a un indice de fluidification par cisaillement SH$_{2,7/210}$ de 85 à 200.

3. Composition de polyéthylène selon la revendication 1 ou 2, dans laquelle la composition de polyéthylène et/ou la résine de base a un indice de fluidification par cisaillement extrapolé SH$_{1/100}$ de 31 à 60.

4. Composition de polyéthylène selon l'une quelconque des revendications précédentes ayant une masse volumique supérieure à 963,0 kg/m$^3$ et inférieure ou égale à 971,0 kg/m$^3$, déterminée selon la norme ISO 1183-1:2004.

5. Composition de polyéthylène selon l'une quelconque des revendications précédentes dans laquelle la composition et/ou la résine de base a un module de conservation G' (2 kPa) de 850 Pa à 1 000 Pa.

6. Composition de polyéthylène selon l'une quelconque des revendications précédentes ayant un indice de fluidité à chaud MFR$_{21,6}$ (190 °C, 21,6 kg) de 7,0 à 13,0 g/10 min, déterminé selon la norme ISO 1133.

7. Composition de polyéthylène selon l'une quelconque des revendications précédentes, dans laquelle la composition a un rapport d'indices de fluidité FRR$_{21/5}$, étant le rapport de MFR$_{21}$ à MFR$_5$, de 40 à 65.

8. Composition de polyéthylène selon l'une quelconque des revendications précédentes, dans laquelle la résine de base comprend au moins deux fractions d'homopolymère ou de copolymère d'éthylène (A) et (B) étant différentes en termes de poids moléculaire moyen en poids M$_w$,
dans laquelle la fraction (A) est un homopolymère d'éthylène et la fraction (B) est un copolymère d'éthylène et de 1-hexène,
moyennant quoi la fraction (A) a un indice de fluidité à chaud MFR$_2$ (190 °C, 2,16 kg) de 380 à 600 g/10 min, et dans laquelle la fraction (A) est présente en une quantité de 46 à 52 % en poids par rapport à la résine de base.

9. Composition de polyéthylène pouvant être obtenue par un procédé en plusieurs étapes, le procédé en plusieurs étapes comprenant

    a) la polymérisation d'éthylène en présence de

        (i) un catalyseur Ziegler-Natta supporté sur de la silice ayant une composition molaire du catalyseur incluant

| | |
|---|---|
| Al | de 1,30 à 1,65 mol/kg de silice, |
| Mg | de 1,25 à 1,61 mol/kg de silice, |
| Ti | de 0,70 à 0,90 mol/kg de silice, |

        et ayant une taille moyenne de particule (D50) de 7 à 15 μm,
        (ii) dans un réacteur en boucle en présence d'un composé d'alkylaluminium et d'un agent de transfert de chaîne pour obtenir un matériau intermédiaire, le matériau intermédiaire ayant un indice de fluidité à chaud MFR$_2$ (190 °C, 2,16 kg) de 380 à 600 g/10 min ; et

    b) le transfert du matériau intermédiaire dans un réacteur en phase gazeuse

        (i) alimentation d'éthylène et de 1-hexène dans le réacteur en phase gazeuse
        (ii) polymérisation supplémentaire du matériau intermédiaire pour obtenir une résine de base ayant une masse volumique supérieure à 951 kg/m$^3$ et inférieure ou égale à 957 kg/m$^3$, déterminée selon la norme ISO 1183-1:2004, et ayant une teneur en motifs dérivés du 1-hexène de 0,45 à 0,95 % en poids

c) l'extrusion de la résine de base en une composition de polyéthylène ayant un indice de fluidité à chaud $MFR_5$ (190 °C, 5 kg) de 0,12 à 0,21 g/10 min, déterminé selon la norme ISO 1133 et une résine de base ayant un indice de polydispersité PI dans la plage supérieure ou égale à 3,5 Pa$^{-1}$ et inférieure ou égale à 4,9 Pa$^{-1}$ en présence de stabilisants et de noir de carbone.

10. Article comprenant la composition de polyéthylène selon l'une quelconque des revendications 1 à 9.

11. Article selon la revendication 10 étant un tuyau ou un raccord de tuyau.

12. Tuyau selon la revendication 11 ayant une résistance à la propagation lente des fissures dans l'essai sur tuyau entaillé d'au moins 2 300 h, déterminée selon la norme ISO 13479 à une pression de 9,2 bar et à 80 °C.

13. Tuyau selon les revendications 11 ou 12 ayant une température critique S4 de - 20,0 °C ou inférieure.

14. Utilisation d'une composition de polyéthylène selon l'une quelconque des revendications 1 à 9 pour la production d'un article.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1987097 A
- EP 1781712 A
- EP 1922342 A
- EP 1146079 A
- EP 688794 A
- WO 01155230 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- WO 2007025640 A
- US 4933149 A
- EP 684871 A
- WO 2005087261 A
- US 4578879 A

- EP 600414 A
- EP 721798 A
- US 4543399 A
- EP 699213 A
- WO 9425495 A
- EP 696293 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- WO 2006063771 A
- EP 428054 A
- WO 9619503 A
- WO 9632420 A

**Non-patent literature cited in the description**

- **SCHEIRS ; BÖHM ; BOOT ; LEEVERS.** PE100 Resins for Pipe Applications. TRIP, 1996, vol. 4, 408-415
- **GELDART ; BAYENS.** The Design of Distributors for Gas-fluidised Beds. *Powder Technology,* 1985, vol. 42
- **GELDART.** Gas Fluidisation Technology. J. Wiley & Sons, 1996
- **KLIMKE, K. ; PARKINSON, M. ; PIEL, C. ; KAMIN-SKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Reson.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, 1-198

- **CASTIGNOLLES, P. ; GRAF, R. ; PARKINSON, M. ; WILHELM, M. ; GABORIEAU, M.** *Polymer,* 2009, vol. 50, 2373
- **ZHOU, Z. ; MUEMMERLE, R. ; QIU, X. ; REDWINE, D. ; CONG, R. ; TAHA, A. ; BAUGH, D. ; WINNI-FORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **J. RANDALL.** *Macromol. Sci., Rev. Macromol. Chem. Phys.,* 1989, vol. C29, 201
- **HEINO, E.L. ; LEHTINEN, A. ; TANNER J. ; SEP-PÄLÄ, J. ; NESTE OY ; PORVOO, FINLAND.** Rheological characterization of polyethylene fractions. *Theor. Appl. Rheol., Proc. Int. Congr. Rheol,* 1992, vol. 1, 360-362
- **HEINO, E.L. ; BOREALIS POLYMERS OY ; POR-VOO, FINLAND.** The influence of molecular structure on some rheological properties of polyethylene. *Annual Transactions of the Nordic Rheology Society,* 1995

- Definition of terms relating to the non-ultimate mechanical properties of polymers. *Pure & Appl. Chem.,* 1998, vol. 70 (3), 701-754